Europäisches Patentamt

European Patent Office

Office européen des brevets

(11) Veröffentlichungsnummer: **0 258 812**
**B1**

(12) **EUROPÄISCHE PATENTSCHRIFT**

(45) Veröffentlichungstag der Patentschrift:
31.01.90

(21) Anmeldenummer: **87112419.4**

(22) Anmeldetag: **26.08.87**

(51) Int. Cl.⁴: **F16F 9/00**

(54) **Stufenlos blockierbare Verstelleinrichtung.**

(30) Priorität: **28.08.86  DE 3629250**

(43) Veröffentlichungstag der Anmeldung:
**09.03.88 Patentblatt 88/10**

(45) Bekanntmachung des Hinweises auf die Patenterteilung:
**31.01.90 Patentblatt 90/5**

(84) Benannte Vertragsstaaten:
**DE ES FR GB IT**

(56) Entgegenhaltungen:
**EP-A- 0 115 209**
**DE-A- 1 625 465**
**DE-A- 2 022 609**
**DE-A- 3 519 203**
**US-A- 3 108 610**

(73) Patentinhaber: **Stabilus GmbH, Wallersheimer Weg 100,
D-5400 Koblenz-Neuendorf(DE)**

(72) Erfinder: **Wirges, Winfried, Dieblicher Strasse 1,
D-5400 Koblenz(DE)**

(74) Vertreter: **Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86(DE)**

## Beschreibung

### Hintergrund der Erfindung

Die Erfindung betrifft eine stufenlos blockierbare Stelleinrichtung umfassend einen Zylinder mit einer Zylinderachse, einem Hohlraum, einer Zylinderinnenfläche und zwei Endwänden, eine durch mindestens eine der Endwände dichtend hindurchgeführte Kolbenstange, welche in Richtung der Zylinderachse gegenüber dem Zylinder beweglich ist, eine innerhalb des Zylinders mit der Kolbenstange verbundene Kolbeneinheit, welche dichtend an der Zylinderinnenfläche anliegt und den Hohlraum innerhalb des Zylinders in zwei Arbeitsräume unterteilt, eine Fluidenfüllung in den Arbeitsräumen, eine Überströmverbindung, welche die beiden Arbeitsräume miteinander verbindet, und eine von der Außenseite des Zylinders her betätigbare Absperrventilanordnung in der Überströmverbindung, wobei die Überströmverbindung in Antwort auf Überdruck in jedem der beiden Arbeitsräume öffenbar ist.

Solche Stelleinrichtungen werden z.B. zum Einstellen von Türen oder Klappen in gewünschte Öffnungsstellungen verwendet. Um die Einstellung vorzunehmen, wird das Absperrventil geöffnet. Wenn die gewünschte Einstellung erreicht ist, wird das Absperrventil wieder geschlossen, so daß die Türe bzw. Klappe dann festgestellt ist. Es kann vorkommen, daß eine Schließ- oder Öffnungskraft auf die Tür oder Klappe ausgeübt wird, ohne daß das Absperrventil geöffnet ist. Dann treten äußerst hohe Kräfte an der Stelleinrichtung und an der Lagerung der Tür oder Klappe auf. Dabei können leicht Deformationen an der Stellvorrichtung und/oder an der Lagerung der Tür bzw. Klappe auftreten. Unter Umständen kann die Kolbenstange gewaltsam aus dem Kolben gerissen werden.

### Erläuterung des Standes der Technik

Aus der DE-OS 3 519 203 ist eine stufenlos blockierbare Stelleinrichtung für eine Tür eines Kraftfahrzeuges mit den Merkmalen des Oberbegriffs des Anspruchs 1 bekannt. Bei dieser Stelleinrichtung ist die Absperrventilanordnung in der außerhalb des Zylinders verlaufenden Überströmverbindung angeordnet. Die Absperrventilanordnung wird dabei beim Öffnen oder Schließen der Tür von außen durch die Bedienung des Türgriffs gesteuert. Wird die Tür ohne Betätigung des Griffes weiter geöffnet, so gibt die einseitig als Sicherheitsventil wirkende Absperrventilanordnung die Überströmverbindung frei. Beim Schließen der Tür ohne Bedienung des Türgriffes tritt dagegen ein weiteres, von der Absperrventilanordnung getrenntes Ventil in Aktion.

Durch die DE-PS 1 554 479 ist weiterhin eine stufenlos blockierbare Stelleinrichtung bekannt, die einen mit Fluid gefüllten Zylinder aufweist, auf dessen Innenwand ein mit einer Kolbenstange verbundener Kolben abdichtend geführt ist. Der Zylinderinnenraum wird vom Kolben in zwei Arbeitsräume unterteilt, wobei diese beiden Arbeitsräume mittels eines von außen betätigbaren Blockierventiles miteinander verbindbar sind. Das im Zylinderinnenraum vorhandene Fluid steht dabei unter Druck und übt bei geöffnetem Blockierventil eine Ausschubkraft auf die Kolbenstange aus.

Eine weitere stufenlos blockierbare Steuereinrichtung ist durch das DE-GM 8 500 855 bekannt, bei welchem keinerlei Ausschubkraft auf die Kolbenstange ausgeübt wird. Zur Kompensation der temperaturbedingten Flüssigkeitsausdehnung weist mindestens ein Arbeitsraum eine Begrenzung durch eine axial bewegliche Trennwand auf, die an einer Anschlagfläche eines federnden Ausgleichskörpers anliegend angeordnet ist.

Aus der DE-OS 26 59 491 ist eine Gasfeder bekannt, welche eine bei der Einschubbewegung der Kolbenstange in den Zylinder druckabhängig wirkende Arretierung aufweist. Ein willkürlich von außen zu betätigendes Blockierventil ist bei dieser der teilweisen Kompensation des Gewichtes einer Kraftfahrzeug-Heckklappe dienenden Gasfeder nicht vorhanden.

### Aufgabe der Erfindung

Die Aufgabe der vorliegenden Erfindung ist es, eine stufenlos blockierbare Stelleinrichtung zu schaffen, welche einfach im Aufbau ist und eine einfache Montage gestattet.

### Das Wesen der Erfindung

Die Erfindung geht aus von einer stufenlos blockierbaren Stelleinrichtung umfassend einen Zylinder mit einer Zylinderachse, einem Hohlraum, einer Zylinderinnenfläche und zwei Endwänden, eine durch mindestens eine der Endwände dichtend hindurchgeführte Kolbenstange, welche in Richtung der Zylinderachse gegenüber den, Zylinder beweglich ist, eine innerhalb des Zylinders mit der Kolbenstange verbundene Kolbeneinheit, welche dichtend an der Zylinderinnenfläche anliegt und den Hohlraum innerhalb des Zylinders in zwei Arbeitsräume unterteilt, eine Fluidenfüllung in den Arbeitsräumen, eine Überströmverbindung, welche die beiden Arbeitsräume miteinander verbindet, und eine von der Außenseite des Zylinders her betätigbare Absperrventilanordnung in der Überströmverbindung, wobei die Überströmverbindung in Antwort auf Überdruck in jedem der beiden Arbeitsräume öffenbar ist. Im Hinblick auf die oben formulierte Aufgabe ist dabei vorgesehen, daß die Absperrventilanordnung zwei zusammenwirkende Teilbaugruppen umfaßt, die in entgegengesetzter Richtung in je eine Grundstellung vorgespannt sind und in diesen Grundstellungen dichtend, d.h. die Überströmverbindung schließend aneinander anliegen und daß von den beiden Teilbaugruppen die eine durch einen vorbestimmten Überdruck in dem jeweils einen durch die andere durch Überdruck in den jeweils anderen Arbeitsraum aus der jeweiligen Grundstellung gegenläufig ausrückbar sind, d.h. relativ zueinander jeweils in gleicher Richtung beweglich sind, wobei diese Relativbewegung zu einer Öffnung der Überströmverbindung führt. Bedingt durch die Öffnung der Überströmverbindung bei Überdruck wird eine hohe Funktionssicherheit erzielt, denn bei nicht geöffnetem Absperrventil wird auf einer vorbestimmten Druckdifferenz zwischen den Arbeitsräumen der Stelleinrichtung bewirkt, daß die auf die Kolbenstange wirkenden Kräfte nicht weiter ansteigen können. Insbesondere bei Anwendung einer derartigen Stelleinrichtung als Türfeststeller für Kraftfahrzeuge kann die Stelleinrichtung möglichst klein und mit geringem Gewicht ausgeführt werden.

Bevorzugt ist eine erfindungsgemäße Stelleinrichtung in der Weise ausgebildet, daß ein Ventilraum mit einer Ventilraumachse und einer Ventilraumumfangsfläche vorgesehen ist, daß koaxial zu dem Ventilraum in diesem verschiebbar die einen Ventilkörper bildende eine Teilbaugruppe untergebracht ist, daß dieser Ventilkörper einen Ventilkopf mit einer Außenumfangsfläche größeren Durchmessers und eine Verlängerung mit einer Außenumfangsfläche kleineren Durchmessers aufweist, daß radial zwischen dem Ventilkörper und der Ventilraumumfangsfläche die eine Dichtungsringeinheit aufweisende andere Teilbauteilgruppe angeordnet ist, die an der Ventilraumumfangsfläche dichtend anliegt, daß der Ventilkörper in eine durch einen Ventilanschlag bestimmte Grundstellung axial vorgespannt ist, daß die Dichtungsringeinheit in eine durch einen Dichtungsanschlag bestimmte Grundstellung axial vorgespannt ist, daß in der Grundstellung des Ventilkörpers und in der Grundstellung der Dichtungsringeinheit der Ventilkopf mit seiner Außenumfangsfläche an der Dichtungsringeinheit dichtend anliegt, daß der Ventilkörper aus einer Grundstellung in eine Öffnungsstellung verschiebbar ist, in welcher die Außenumfangsfläche der Verlängerung an die Dichtungsringeinheit angenähert ist und daß die Dichtungsringeinheit aus ihrer Grundstellung in eine Öffnungsstellung verschiebbar ist, in der sie an die Außenumfangsfläche der Verlängerung angenähert ist. Bei dieser Ausführungsform kann der Ventilkörper zum einen durch äußere Krafteinwirkung aus seiner Grundstellung ausgerückt werden und zum anderen durch Überdruck in dem einen der Arbeitsräume. Er wirkt dabei als ein erstes Sicherheitsventil. Andererseits kann die Dichtungsringeinheit durch Überdruck in dem anderen der Arbeitsräume ausgerückt werden. Sie wirkt dabei als zweites Sicherheitsventil. Für jede Bewegungsrichtung der Kolbenstange relativ zum Zylinder ist damit ein Sicherheitsventil geschaffen, welches von einer vorbestimmten Krafteinwirkung ab auch dann öffnet, wenn das Absperrventil geschlossen ist.

Die so ausgebildete Stelleinrichtung ist in ihrem Aufbau besonders einfach, weil von einem einzigen Ventilkörper und einer einzigen Dichtungsringeinheit die Funktionen eines Absperrventils und zweier Sicherheitsventile übernommen werden. Die Vorspannung des Ventilkörpers und der Dichtungsringeinheit in Richtung auf ihre jeweilige Grundstellung kann ganz oder teilweise von den Drücken in den Arbeitsräumen übernommen werden. Es ist dabei auch möglich, dem Ventilkörper eine Ventilfeder und der Dichtungsringeinheit eine Dichtungsfeder zuzuordnen, welche den Ventilkörper bzw. die Dichtungsringeinheit in Richtung auf die jeweilige Grundstellung belasten. Durch geeignete Wahl dieser Ventilfeder und dieser Dichtungsfeder können die Ansprechdrücke, bei denen die Überströmverbindung selbsttätig öffnet, leicht auf den jeweils gewünschten Wert eingestellt werden.

Das Absperrventil kann insbesondere innerhalb der Kolbeneinheit untergebracht werden, so daß eine kleinbauende Stelleinrichtung von einfacher äußerer Form erhalten wird.

Die verschiedenen Merkmale der Erfindung sind insbesondere in den angefügten Ansprüchen behandelt, die einen Teil der Offenbarung bilden. Zum besseren Verständnis der Erfindung, ihrer Betriebsvorteile und spezifischen Wirkungen wird nun auf die beiliegenden Zeichnungen und die Beschreibung Bezug genommen, in denen bevorzugte Ausführungsformen der Erfindung behandelt werden.

Kurzbeschreibung der Zeichnungen

Anhand der in der Zeichnung dargestellten Ausführungsform wird die Erfindung nachfolgend näher erläutert. Es zeigt:

Fig. 1 die Einbausituation der stufenlos blockierbaren Stelleinrichtung als Türfeststeller bei Kraftfahrzeugtüren in schematischer Darstellung;
Fig. 2 die stufenlos blockierbare Stelleinrichtung gemäß Fig. 1 im Längsschnitt;
Fig. 3 den Bereich des Kolbens gemäß Fig. 2 in vergrößerter Darstellung;
Fig. 4 eine Ausführungsform ähnlich derjenigen in Fig. 3, wobei auf den Ventilkörper eine Ventilfeder einwirkt.

Beschreibung der bevorzugten Ausführungsform

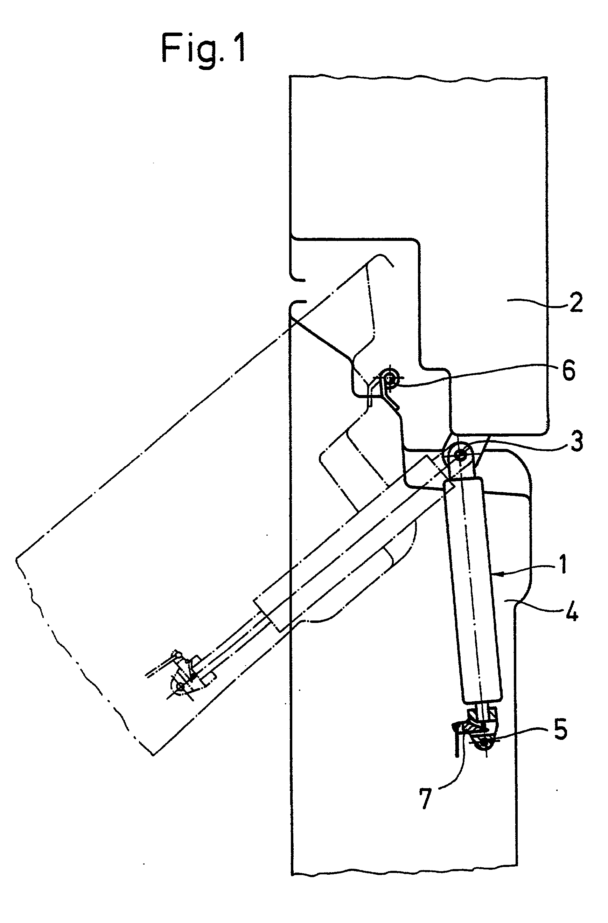

In Fig. 1 ist die stufenlos blockierbare Stelleinrichtung 1 mittels eines zylinderfesten Gelenkauges auf einem mit der Karosserie 2 verbundenen Lagerbolzen 3 schwenkbar befestigt, während ein mit einer Türe 4 fest verbundener Lagerbolzen 5 das Schwenklager für ein auf der Kolbenstange befestigtes Bauteil bildet, welches eine Auslöseeinrichtung 7 für ein von außen zu betätigendes Absperrventil aufnimmt. Diese Auslöseeinrichtung 7 kann über einen Seilzug oder andere geeignete Mittel betätigt werden. Die Türe 4 des Kraftfahrzeuges ist mittels eines Türscharniers 6 in der Karosserie 2 gelagert und schwenkt bei Betätigung um eine vertikale oder nahezu vertikale Achse. Beim Öffnen bzw. Schließen der Türe 4 wird durch den Türgriff die Auslöseeinrichtung 7 betätigt und öffnet das Absperrventil, während nach dem Loslassen des Türgriffes das Absperrventil schließt und die Türe 4 in der gewünschten Stellung festgehalten wird.

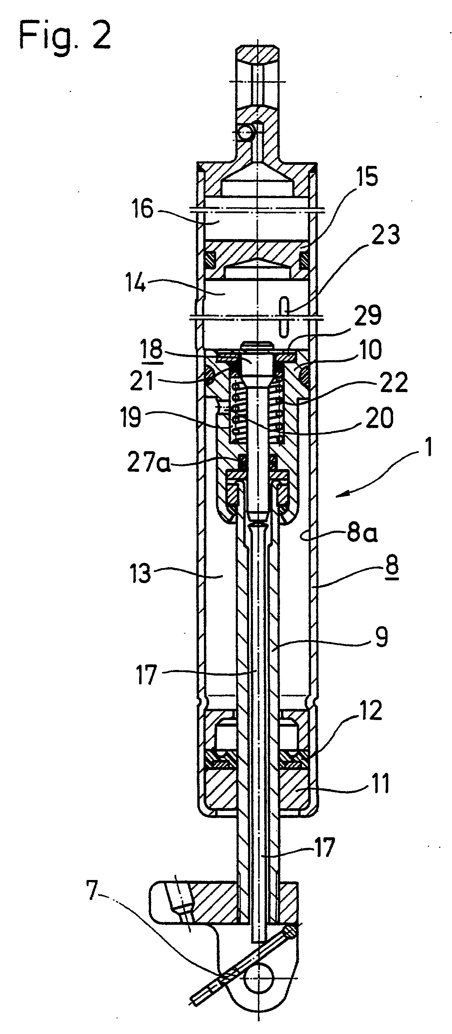

Die Fig. 2 zeigt die stufenlos blockierbare Stelleinrichtung 1, die aus einem Zylinder 8 besteht, auf dessen zylindrischer Innenfläche 8a eine mit einer Kolbenstange 9 verbundene Kolbeneinheit 10 abdichtend geführt ist. Diese Kolbeneinheit 10 trennt den mit Flüssigkeit gefüllten Innenraum des Zylinders 8 in den kolbenstangenseitigen Arbeitsraum 13 und den kolbenstangenfernen Arbeitsraum 14, wobei die Kolbenstange 9 am kolbenstangenaustrittsseitigen Ende des Zylinders 8 mittels einer Kolbenstangenführung 11 geführt und durch eine Kolbenstangendichtung 12 nach außen abgedichtet ist. Im Innenraum des Zylinders 8 befindet sich außerdem ein mit einer unter Druck stehenden Gasfüllung versehener Federraum 16, welcher zum kolbenstangenfernen Arbeitsraum 14 durch einen Trennkolben 15 abgedichtet ist und die Flüssigkeitsfüllung in den Arbeitsräumen 13 und 14 vom Gasdruck im Federraum 16 beaufschlagt wird. Die Kolbenstange 9 und die Kolbeneinheit 10 bilden eine Baugruppe 9, 10. Innerhalb dieser Baugruppe 9, 10 ist ein Ventilraum 19 untergebracht, welcher einen Ventilraumboden 19a, eine Ventilraumumfangsfläche 19b und eine Ventilraumöffnung 19c aufweist. In dem Ventilraum 19 ist ein Ventilkörper 18 untergebracht, welcher einen Ventilkopf 25 und einen Ventilschaft 27 aufweist. Der Ventilkopf 25 besitzt eine zylindrische Außenumfangsfläche von größerem Durchmesser und der Ventilschaft 27 besitzt eine zylindrische Außenumfangsfläche von kleinerem Durchmesser. Der Ventilkopf 25 und der Ventilschaft 27 gehen über eine konische Verbindungsfläche 26 ineinander über. Der Ventilschaft 27 ist durch den Ventilkammerboden 19a unter Vermittlung einer Dichtung 27a hindurchgeführt in die Bohrung 9a der Kolbenstange 9. Die Bohrung 9a der Kolbenstange 9 steht mit Atmosphärendruck in Verbindung.

In die Ventilraumöffnung 19c ist ein Anschlagring 29 eingesetzt, der von dem Ventilkopf 25 durchsetzt wird. Der Ventilkopf 25 ist mit einem geschlitzten Ring 28 bestückt, welcher gegen den Anschlagring 29 anliegt. Zwischen der Außenumfangsfläche des Ventilkopfes 25 und der Ventilrauminnenfläche 19b ist ein Dichtungsring 21 untergebracht. Dieser Dichtungsring 21 liegt dichtend an der Außenumfangsfläche des Ventilkopfes 25 und ebenfalls dichtend an der Ventilraumumfangsfläche 19b an. Durch eine Dichtungsfeder 22, welche sich am Ventilraumboden 19a abstützt und eine Andrückscheibe 24 wird der Dichtungsring 21 gegen den Anschlagring 29 gedrückt.

Das obere Ende des Ventilkopfes 25 ist dem Druck in dem Arbeitsraum 14 ausgesetzt. Hierzu ist der Ring 28 mit einem verhältnismäßig breiten Schlitz versehen. Der Ventilraum 19 ist über eine Radialbohrung 20 mit dem Arbeitsraum 13 verbunden, so daß in dem Ventilraum 19 der gleiche Druck herrscht wie in dem Arbeitsraum 13. Auf den Querschnitt des Ventilkopfes 25 wirkt der Druck in dem Arbeitsraum 14. Auf die konische Übergangsfläche 26 wirkt der Druck in dem Arbeitsraum 13. Da der Querschnitt des Ventilkopfes 25 größer ist als der Querschnitt des Ventilschafts 27, wird der Ventilkörper 18 - solange die Drücke in den Arbeitsräumen 13 und 14 annähernd gleich sind - gegen den Anschlagring 29 angedrückt. Damit ist die Überströmverbindung 19c, 19, 20 zwischen beiden Arbeitsräumen 13 und 14 geschlossen. Wenn keine äußere Kraft auf den Zylinder 8 und die Kolbenstange 9 einwirkt, so ist die Kolbeneinheit 10 in einer Gleichgewichtsstellung gehalten, wobei der Druck in dem Arbeitsraum 13 entsprechend der Querschnittsdifferenz zwischen dem Arbeitsraum 14 und dem Arbeitsraum 13, welche durch den Querschnitt der Kolbenstange 9 bedingt ist, größer ist als der Druck in dem Arbeitsraum 14. Wenn die Einstellung der Kolbenstange 9 gegenüber dem Zylinder 8 verändert werden soll, so wird der Ventilkörper 18 durch den Ventilstößel 17 nach oben gedrückt, bis die konische Übergangsfläche 26 in den Bereich des Dichtungsrings 21 gelangt. Dann ist die Überströmverbindung 19c, 19, 20 geöffnet und die Kolbenstange 9 kann gegenüber dem Zylinder 8 verschoben werden, wobei die Stellung des Trennkolbens 15 verändert wird entsprechend der Veränderung des Volumens der Kolbenstange 9 innerhalb des Zylinders 8.

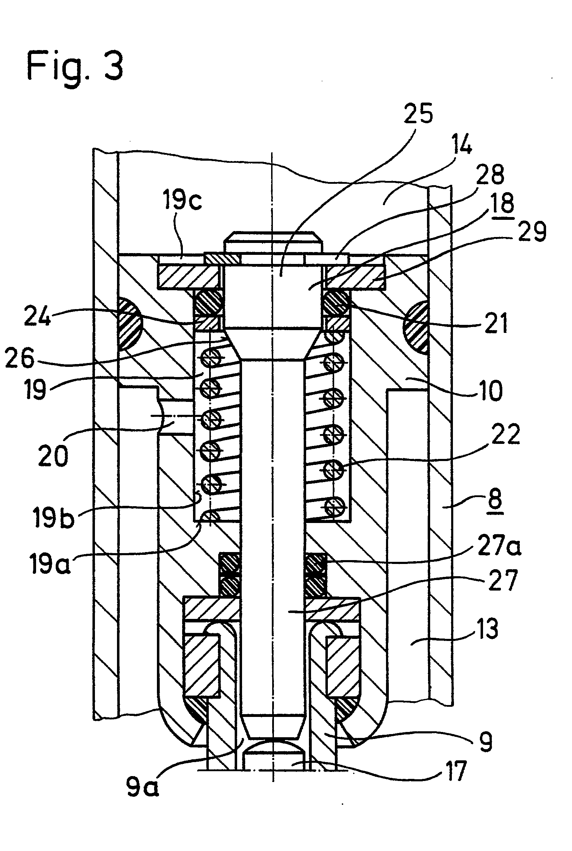

Wenn in der Absperrventilstellung gemäß Fig. 3 die Kolbenstange 9 unter Ausübung einer vorbestimmten Kraft in den Zylinder 8 hineingeschoben wird, so steigt der Druck in dem Arbeitsraum 14 derart an, daß der Dichtungsring 21 gegen die Wirkung der Dichtungsfeder 22 in Fig. 3 nach unten verschoben wird und in den Bereich der konischen Übergangsfläche 26 gelangt. Dann wird die Überströmverbindung 19c, 19, 20 ebenfalls geöffnet und die Kolbenstange 9 kann gegenüber dem Zylinder 8 verschoben werden.

Wenn bei der Absperrventilstellung gemäß Fig. 3 die Kolbenstange 9 mit einer vorbestimmten Kraft aus dem Zylinder 8 herausgezogen wird, so steigt der Druck in dem Arbeitsraum 13 gegenüber dem Druck in dem Arbeitsraum 14 an. Bei einer vorbestimmten Druckdifferenz wirkt der in dem Arbeitsraum 13 herrschende Druck auf die Differenzfläche zwischen dem Ventilkopf 25 und dem Ventilschaft 27 mit solcher Kraft ein, daß der Ventilkörper 18 nach oben verschoben wird, bis seine konische Übergangsfläche 26 in den Bereich des Dichtungsrings 21 gelangt. Dann ist die Überströmverbindung 19c, 19, 20 wiederum offen und die Kolbenstange 9 kann aus dem Zylinder herausgezogen werden.

Angewandt auf die Konstruktion nach Fig. 1 bedeutet dies, daß

1. die Tür bei Betätigung der Auslöseeinrichtung 7 jederzeit leicht verstellt und wieder festgestellt werden kann;

2. wenn die Tür ohne Betätigung der Auslöseeinrichtung 7 mit großer Kraft in der einen oder in der anderen Richtung verschwenkt wird, so wird die Überströmverbindung 19c, 19, 20 ebenfalls geöffnet, so daß weder an der Stelleinrichtung noch an der Tür eine Beschädigung eintreten kann. Wenn keine Kraft mehr an der Tür anliegt, so stellt sich automatisch der Zustand gemäß Fig. 3 wieder ein.

Die Auslöseeinrichtung 7 kann beispielsweise mit dem Türgriff gekoppelt sein, so daß sich bei Einwirkung auf den Türgriff (nicht dargestellt) die Überströmverbindung 19c, 19, 20 zwangsläufig öffnet.

Im oberen Endbereich des Zylinders 8 sind - wie aus Fig. 2 ersichtlich - Längsnuten 23 vorgesehen, welche die Kolbeneinheit 10 überbrücken können, sobald sich die Kolbeneinheit der oberen Endstellung nähert, d. h. derjenigen Endstellung, die einer annähernd geschlossenen Türe gemäß Fig. 1 entspricht. Dann ist die Kolbeneinheit 10 gegenüber dem Zylinder 8 verschiebbar, auch ohne daß die Überströmverbindung 19c, 19, 20 öffnet. Die Wirkung der Stelleinrichtung ist deshalb bei geschlossener Tür im wesentlichen aufgehoben.

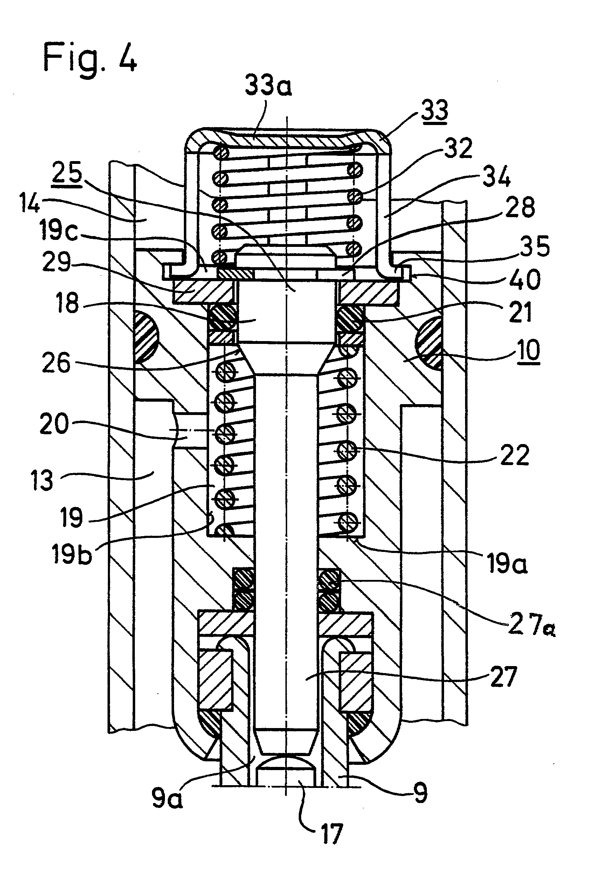

In Fig. 4 ist eine weitere Ausführungsform gezeigt, wobei auf den Ring 28 und damit auf den Ventilkopf 25 eine Ventilfeder 32 wirkt. Diese Ventilfeder 32 stützt sich am Boden 33a eines Käfigs 33 ab. Der Käfig 33 besitzt axial gerichtete Zungen 34 mit radialen Vorsprüngen 35. Diese radialen Vorsprünge 35 greifen in eine Nut 40 der Ventileinheit 10 ein, so daß einerseits der Käfig 33 und andererseits der Anschlagring 29 an der Ventileinheit 10 befestigt ist. Mit Hilfe der Ventilfeder 32 kann der Ansprechdruck in dem Arbeitsraum 13, bei welchem die Überströmverbindung 19c, 19, 20 durch Aufwärtsverschiebung des Ventilkörpers 18 geöffnet wird, variiert werden. Man braucht hierzu nur verschiedene Ventilfedern 32 einzusetzen. Außerdem ist die Konstruktion gemäß Fig. 4 dank der Ventilfeder 32 besonders für solche Fälle geeignet, bei denen der Druck in den Arbeitsräumen 13 und 14 verhältnismäßig gering ist, so daß auch die Vorspannung auf den Ventilkörper 18 nach unten gering ist.

Auch die Dichtungsfeder 22 kann nach Belieben gewählt werden. Damit läßt sich auch der Ansprechdruck in dem Arbeitsraum 14 einstellen, bei welchem die Überströmverbindung 19c, 19, 20 durch Abwärtsverschiebung des Dichtungsrings 21 öffnet.

Es wurden spezifische Ausführungsformen der Erfindung dargestellt und beschrieben, um die Anwendung der Erfindungsprinzipien zu illustrieren.

**Patentansprüche**

1. Stufenlos blockierbare Stelleinrichtung umfassend einen Zylinder (8) mit einer Zylinderachse, einem Hohlraum (13, 14), einer Zylinderinnenfläche (8a) und zwei Endwänden, eine durch mindestens eine (11, 12) der Endwände dichtend hindurchgeführte Kolbenstange (9), welche in Richtung der Zylinderachse gegenüber dem Zylinder (8) beweglich ist, eine innerhalb des Zylinders (8) mit der Kolbenstange (9) verbundene Kolbeneinheit (10), welche dichtend an der Zylinderinnenfläche (8a) anliegt und den Hohlraum (13, 14) innerhalb des Zylinders (8) in zwei Arbeitsräume (13, 14) unterteilt, eine Fluidenfüllung in den Arbeitsräumen (13, 14), eine Überströmverbindung (19c, 19, 20), welche die beiden Arbeitsräume (13, 14) miteinander verbindet, und eine von der Außenseite des Zylinders (8) her betätigbare Absperrventilanordnung (18, 21) in der Überströmverbindung (19c, 19, 20), wobei die Überströmverbindung (19c, 19, 20) in Antwort auf Überdruck in jedem der beiden Arbeitsräume (13, 14) öffenbar ist, dadurch gekennzeichnet, daß die Absperrventilanordnung (18, 21) zwei zusammenwirkende Teilbaugruppen (18, 21) umfaßt, die in entgegengesetzter Richtung in je eine Grundstellung vorgespannt sind und in diesen Grundstellungen dichtend, d.h. die Überströmverbindung (19c, 19, 20) schließend aneinander anliegen und daß von den beiden Teilbaugruppen (18, 21) die eine (18) durch einen vorbestimmten Überdruck in dem jeweils einen (13) und die andere (21) durch Überdruck in dem jeweils anderen Arbeitsraum (14) aus der jeweiligen Grundstellung gegenläufig ausrückbar sind, d.h. relativ zueinander jeweils in gleicher Richtung beweglich sind, wobei diese Relativbewegung zu einer Öffnung der Überströmverbindung (19c, 19, 20) führt.

2. Stufenlos blockierbare Stelleinrichtung nach Anspruch 1, dadurch gekennzeichnet, daß ein Ventilraum (19) mit einer Ventilraumachse und einer Ventilraumumfangsfläche (19b) vorgesehen ist, daß koaxial zu dem Ventilraum (19) in diesem verschiebbar die einen Ventilkörper (18) bildende eine Teilbaugruppe (18) untergebracht ist, daß dieser Ventilkörper (18) einen Ventilkopf (25) mit einer Außenumfangsfläche größeren Durchmessers und eine Verlängerung (26, 27) mit einer Außenumfangsfläche kleineren Durchmessers aufweist, daß radial zwischen dem Ventilkörper (18) und der Ventilraumumfangsfläche (19b) die eine Dichtungsringeinheit (21) aufweisende andere Teilbaugruppe (21) angeordnet ist, die an der Ventilraumumfangsfläche (19b) dichtend anliegt, daß der Ventilkörper (18) in eine durch einen Ventilanschlag (29) bestimmte Grundstellung axial vorgespannt ist, daß die Dichtungsringeinheit (21) in eine durch einen Dichtungsanschlag (29) bestimmte Grundstellung axial vorgespannt ist, daß in der Grundstellung des Ventilkörpers (18) und in der Grundstellung der Dichtungsringeinheit (21) der Ventilkopf (25) mit seiner Außenumfangsfläche an der Dichtungsringeinheit (21) dichtend anliegt, daß der Ventilkörper (18) aus seiner Grundstellung in eine Öffnungsstellung verschiebbar ist, in welcher die Außenumfangsfläche der Verlängerung (26, 27) an die Dichtungsringeinheit (21) angenähert ist und daß die Dichtungsringeinheit (21) aus ihrer Grundstellung in eine Öffnungsstellung verschiebbar ist, in der sie an die Außenumfangsfläche der Verlängerung (26, 27) angenähert ist.

3. Stufenlos blockierbare Stelleinrichtung nach Anspruch 2, dadurch gekennzeichnet, daß der Ventilkörper (18) durch äußere Krafteinwirkung aus seiner Grundstellung ausrückbar ist.

4. Stufenlos blockierbare Stelleinrichtung nach einem der Ansprüche 1 bis 3, dadurch gekennzeichnet, daß der Ventilkörper (18) durch den Druck in einem (14) der Arbeitsräume (13, 14) in Richtung auf seine Grundstellung belastet ist.

5. Stufenlos blockierbare Stelleinrichtung nach einem der Ansprüche 1 bis 4, dadurch gekennzeichnet, daß der Ventilkörper (18) durch eine Ventilfeder (32) in Richtung auf seine Grundstellung belastet ist.

6. Stufenlos blockierbare Stelleinrichtung nach einem der Ansprüche 1 bis 4, dadurch gekennzeichnet, daß die Dichtungsringeinheit (21) durch den Druck in einen (13) der Arbeitsräume (13, 14) in Richtung auf ihre Grundstellung belastet ist.

7. Stufenlos blockierbare Stelleinrichtung nach einem der Ansprüche 1 bis 6, dadurch gekennzeichnet, daß die Dichtungsringeinheit (21) durch eine Dichtungsfeder (22) in Richtung auf ihre Grundstellung belastet ist.

8. Stufenlos blockierbare Stelleinrichtung nach einem der Ansprüche 1 bis 7, dadurch gekennzeichnet, daß die Verlängerung (26, 27) einen konischen Übergangsabschnitt (26) und einen Ventilschaft (27) aufweist.

9. Stufenlos blockierbare Stelleinrichtung nach einem der Ansprüche 1 bis 8, dadurch gekennzeichnet, daß der Ventilraum (19) mit einem (13) der Arbeitsräume (13, 14) verbunden ist, daß die Dichtungsringeinheit (21) auf einer Seite durch den Druck in dem Ventilraum (19) in Richtung auf ihre Grundstellung belastet und auf ihrer anderen Seite dem Druck in dem anderen (14) der beiden Arbeitsräume (13, 14) ausgesetzt ist und daß der Ventilkopf (25) außerhalb des Ventilraums (19) dem Druck in dem anderen (14) der Arbeitsräume (13, 14) ausgesetzt und durch diesen in Richtung auf seine Grundstellung belastet ist.

10. Stufenlos blockierbare Stelleinrichtung nach Anspruch 9, dadurch gekennzeichnet, daß in dem Ventilraum (19) eine die Dichtungsringeinheit (21) in Richtung auf ihre Grundstellung belastende Dichtungsfeder (22) untergebracht ist.

11. Stufenlos blockierbare Stelleinrichtung nach einem der Ansprüche 1 bis 10, dadurch gekennzeichnet, daß an dem Ventilkopf (25) außerhalb des Ventilraums (19) die Ventilfeder (32) angreift, welche den Ventilkörper (18) in Richtung auf seine Grundstellung belastet.

12. Stufenlos blockierbare Stelleinrichtung nach Anspruch 11, dadurch gekennzeichnet, daß die Ventilfeder (32) durch einen Käfig (33) relativ zu der den Ventilraum (19) aufnehmenden Kolbeinheit (10) abgestützt ist.

13. Stufenlos blockierbare Stelleinrichtung nach Anspruch 12, dadurch gekennzeichnet, daß der Käfig (33) topfartig ausgebildet ist mit einem Topfboden (33a) und mit axial gerichteten Federzungen (34), daß an den Federzungen (34) radiale Vorsprünge (35) angebracht sind, welche in eine Ringnut (40) der Kolbeneinheit (10) eingefedert sind, und daß sich die Ventilfedern (32) an dem Topfboden (33a) abstützt.

14. Stufenlos blockierbare Stelleinrichtung nach Anspruch 13, dadurch gekennzeichnet, daß durch den Käfig (33) ein Anschlagring (29) gegenüber der Kolbeneinheit (10) fixiert ist, welcher sowohl den Ventilkörperanschlag als auch den Dichtungsringanschlag bildet.

15. Stufenlos blockierbare Stelleinrichtung nach einem der Ansprüche 1 bis 14 , dadurch gekennzeiohnet, daß die Verlängerung (26, 27) einen Boden (19a) des Ventilraums (19) dichtend durchsetzt und daß ein außerhalb des Ventilraums (19) gelegenes Ende der Verlängerung (26, 27) einem von dem Druck in den Arbeitsräumen (13, 14) unabhängigen Druck ausgesetzt ist.

16. Stufenlos blockierbare Stelleinrichtung nach Anspruch 15, dadurch gekennzeichnet, daß das außerhalb des Ventilraums (19) gelegene Ende der Verlängerung (26, 27) atmosphärischem Druck ausgesetzt ist.

17. Stufenlos blockierbare Stelleinrichtung nach einem der Ansprüche, bis 16 , dadurch gekennzeichnet daß der Ventilraum (19) innerhalb der aus der Kolbenstange (9) und der Kolbeneinheit (10) gebildeten Baugruppe (9, 10) koaxial untergebracht ist.

18. Stufenlos blockierbare Stelleinrichtung nach einem der Ansprüche 1 bis 7, dadurch gekennzeichnet, daß die Kolbenstange (9) eine Bohrung (9a) aufweist und daß in dieser Bohrung (9a) ein Auslösestößel (17) untergebracht ist, welcher mit dem Ventilkörper (18) in Eingriff steht.

19. Stufenlos blockierbare Stelleinrichtung nach einem der Ansprüche 1 bis 1 8, dadurch gekennzeichnet, daß die Kolbenstange (9) nur durch eine Endwand (11, 12) hindurchgeführt ist, und daß das Fluid in den Arbeitsräumen (13, 14) unter Druck steht.

20. Stufenlos blockierbare Stelleinrichtung nach Anspruch 19, dadurch gekennzeichnet, daß innerhalb der Arbeitsräume (13, 14) ein Flüssigkeitsvolumen untergebracht ist, und daß das Flüssigkeitsvolumen durch einen Trennkolben (15) von einem Druckgasvolumen getrennt ist.

## Claims

1. A steplessly lockable positioning means comprising a cylinder (8) with a cylinder axis, a cavity (13, 14), a cylinder inner surface (8a) and two end walls, a piston rod (9) guided in sealing tight manner through at least one (11, 12) of the end walls and which is movable in relaation to the cylinder (8) and in the direction of the cylinder axis, a piston unit (10) inside the cylinder (8) and connected to the piston rod (9) and which bears in sealing tight manner on the inside surface (8a) of the cylinder and which subdivides the cavity (13, 14) inside the cylinder (8) into two working spaces (13, 14), a fluid filling in the working spaces (13, 14), a transfer connection (19c, 19, 20) connection the two working spaces (13, 14) to each other and, adapted to be actuated from outside the cylinder (8), a shut-off valve arrangement (18, 21) in the transfer connection (19c, 19, 20), the transfer connection (19c, 19, 20) being adapted to be opened in response to over-pressure in each of the two working spaces (13, 14), characterised in that the shut-off valve arrangement (18, 21) comprises two co-operating partial assemblies (18, 21) which are initially tensioned in the opposite direction into in each case one basic position in which they bear in sealing tight manner on one another, i.e. sealing the transfer connection (19c, 19, 20) and in that of the two partial assemblies (18, 21) one (18) can be moved by a predetermined over-pressure in the one (13) or in the other (21) by over-pressure in whichever is the other working space (14), so that they are moved in opposition to each other and out of their relevant basic position, i.e. are adapted for movement relative to each other and in each case in the same direction, this relative movement resulting in an opening of the transfer connection (19c, 19, 20).

2. A steplessly lockable positioning means accoording to Claim 1, characterised in that a valve space (19) is provided with a valve space axis and a valve spaceperipheral surface (19b) and in that coaxially with the valve space (19) and displaceable therein there is partial assembly (18) which forms a valve body (18) and in that this valve body (18) comprises a valve head (25) with an outer peripheral surface of larger diameter and an extension (26, 27) having an outer peripheral surface of smaller diameter and in that radially between the valve body (18) and the valve space peripheral surface (19c) there is the other partial assembly (21) which comprises a packing ring unit (21) and which beaars in sealing tight manner against the valve space peripheral surface (19b) and in that the valve body (18) is axially and initailly tensioned into a basic position defined by a valve abutment (29) and in that the packing ring unit (21) is axially and initially tensioned into a basic position determined by a sealing abutment (29) and in that in the basic position of the valve body (18) and in the basic position of the sealing ring unit (21) the outer peripheral surface of the valve head (25) bears in sealing tight manner on the packing ring unit (21) and in that the valve body (18) can be displaced out of its basic position into an open position in which the outer peripheral surface of the extension (26, 27) is moved toward the packing ring unit (21) and in that the latter is displaceable out of its basic position into an open position in which it has moved toward outer peripheral surface of the extension (26, 27).

3. A steplessly lockable positioning means according to Claim 2, characterised in that the valve body (18) can be moved out of its basic position by the application of external forces.

4. A steplessly lockable positioning means according to one of Claims 1 top 3, characterised in that valve body (18) can be biased in the direction of its basic position by the pressure in one (14) of the working spaces (13, 14).

5. A steplessly lockable positioning means according to one of Claims 1 to 4, characterised in that the valve body (18) is biased by a valve spring (32) in the direction of its basic position.

6. A steplessly lockable prositioning means according to one of Claims 1 to 4, characterised in that the packing ring unit (21) is biased in the direction of its basic position by the pressure in one (13) of the working spaces (13, 14).

7. A steplessly lockable positioning means according to one of Claims 1 to 6, characterised in that the packing ring unit (21) is biased in the direction of its basic position by a sealing spring (22).

8. A steplessly lockable positioning means according to one of Claims 1 to 7, characterised in that the extension (26, 27) has a conical transition portion (26) and a valve stem (27).

9. A steplessly lockable positioning means according to one of Claims 1 to 8, characterised in that the valve space (19) is connected to one (13) of the working spaces (13, 14) and in that the packing ring unit (21) is biased on one side by the pressure in the valve space (19) in the direction of its basic position while on its other side it is subject to the pressure in the other (14) of the two working spaces (13, 14) and in that the valve head (25) is outside the valve space (19) subject to the pressure in the other (14) of the working spaces (13, 14) by which it is biased in the direction of its basic position.

10. A steplessly lockable positioning means according to Claim 9, characterised int that in the valve space (19) there is a sealing spring (22) which biases the packing ring unit (21) in the direction of its basic position.

11. A steplessly lockable positioning means according to one of Claims 1 to 10, characterised in that outside the valve space (19), the valve head (25) is engaged by the valve spring (32) which biases the valve body (18) in the direction of its basic position.

12. A steplessly lockable postioning means according to Claim 11, characterised in that the valve spring (32) is biased by a cage (33) relatively to the piston unit (10) accommodating the valve space (19).

13. A steplessly lockable positioning means according to Claim 12, characterised in that the cage (33) is of pot-like construction, with a bottom (33a) and with axially directed spring tongues (34) and in that there are on the spring tongues (34) radial projections (35) which spring into place in an annula groove (40) in the piston unit (10) and in that the valve springs (32) are braced on the bottom (33a) of the pot-shaped cage.

14. A steplessly lockable postioning means according to Claim 13, characterised in that the cage (33) fixes an abutment ring (29) in relation to the piston unit (10) so that it forms both the valve body abutment and also the packing ring abutment.

15. A steplessly lockable positioning means according to one of Claims 1 to 14, characterised in that the extension (26, 27) passes in sealing tight manner through a bottom (19a) of the valve space (19) and in that an end of the extension (26, 27) which is outside the valve space (19) is subject to a pressure which is independent of the pressure in the working spaces (13, 14).

16. A steplessly lockable positioning means according to Claim 15, characterised in that the end of the extension (26, 27) which is situated outside the valve space (19) is subject to atomspheric pressure.

17. A steplessly lockable positioning means according to one of Claims 1 to 16, characterised in that the valve space (19) is accommodated coaxially within the assembly (9, 10) consisting of the piston rod (9) and the piston unit (10).

18. A steplessly lockable positioning means according to one of Claims 1 to 17, characterised in that the piston rod (9) comprises a bore (9a) and in that there is in this bore (9a) a release rod (17) which engages the valve body (18).

19. A steplessly lockable positioning means according to one Claims 1 to 18, characterised in that the piston rod (9) is only passed through one end wall (11, 12) and in that the fluid in the working spaces (13, 14) is pressurised.

20. A steplessly lockable positioning means according to Claim 19, characterised in that there is inside the working spaces (13, 14) a volume of liquid, the volume of liquid being separated from a quantity of pressurised gas by a separating piston (15).

## Revendications

1. Dispositif de réglage à blocage continu, comprenant un cylindre (8) avec un axe de cylindre, une cavité (13, 14), une face intérieure de cylindre (8a) et deux parois terminales, une tige de piston (9) guidée hermétiquement à travers au moins une (11, 12) des parois terminales, tige qui est mobile par rapport au cylindre (8) dans le sens de l'axe du cylindre, un ensemble de piston (10) relié à la tige de piston (9) à l'intérieur du cylindre (8), ensemble qui s'applique hermétiquement contre la face intérieure de cylindre (8a) et divise la cavité (13, 14) à l'intérieur du cylindre (8) en deux chambres de travail (13, 14), un remplissage de fluide dans les chambres de travail (13, 14), une liaison de trop-plein (19c, 19, 20) qui relie entre elles les deux chambres de travail (13, 14), et un ensemble de valve d'isolement (18, 21), actionnable depuis le côté extérieur du cylindre (8), dans la liaison de trop-plein (19c, 19, 20), la liaison de trop-plein (19c, 19, 20) pouvant être ouverte en réponse à une surpression dans chacune des deux chambres de travail (13, 14), caractérisé en ce que l'ensemble de valve d'isolement (18, 21) comprend deux groupes constructifs partiels (18, 21) coopérants, qui sont précontraints dans des directions opposées à des positions de base respectives, et qui, à ces positions de base, s'appliquent hermétiquement l'un contre l'autre, c'est-à-dire en fermant la liaison de trop-plein (19c, 19, 20), et en ce que, des deux groupes constructifs partiels (18, 21), l'un (18) peut être sorti de sa position de base respective par une surpression déterminée dans une chambre de travail respective (13), et l'autre (21) peut être sorti, en sens contraire, de sa position de base par une surpression dans l'autre chambre de travail (14), c'est-à-dire que les groupes constructifs partiels (18, 21) sont mobiles l'un par rapport à l'autre dans la même direction, ce mouvement relatif engendrant une ouverture de la liaison de trop-plein (19c, 19, 20).

2. Dispositif de réglage à blocage continu selon la revendication 1, caractérisé en ce qu'il est prévu une chambre de valve (19) avec un axe de chambre de valve et une face périphérique de chambre de valve (19b), en ce que l'un des groupes constructifs partiels (18), qui forme un corps de valve (18), est logé coaxialement à la chambre de valve (19) et avec possibilité de coulissement dans cette dernière, en ce que ce corps de valve (18) présente une tête de valve (25) avec une face périphérique extérieure de plus grand diamètre et un prolongement (26, 27) avec une face périphérique extérieure de plus petit diamètre, en ce que l'autre groupe constructif partiel (21 qui présente un ensemble de bague d'étanchéité (21) qui s'applique hermétiquement contre la face périphérique de chambre de valve (19b), est disposé radialement entre le corps de valve (18) et la face périphérique de chambre de valve (19b), en ce que le corps de valve (18) est axialement précontraint à une position de base déterminée par une butée de valve (29), en ce que l'ensemble de bague d'étanchéité (21) est axialement précontraint à une position de base déterminée par une butée d'étanchéité (29), en ce qu'à la position de base du corps de valve (18) et à la position de base de l'ensemble de bague d'étanchéité (21), la tête de valve (25) s'applique hermétiquement contre l'ensemble de bague d'étanchéité (21) par sa face périphérique extérieure, en ce que le corps de valve (18) peut être déplacé de sa position de base à une position d'ouverture à laquelle la face périphérique extérieure du prolongement (26, 27) est rapprochée de l'ensemble de bague d'étanchéité (21), et en ce que l'ensemble de bague d'étanchéité (21) peut être déplacé de sa position de base à une position d'ouverture à laquelle il est rapproché de la face périphérique extérieure du prolongement (26, 27).

3. Dispositif de réglage à blocage continu selon la revendication 2, caractérisé en ce que le corps de valve (18) peut être sorti de sa position de base par l'action d'une force externe.

4. Dispositif de réglage à blocage continu selon l'une quelconque des revendications 1 à 3, caractérisé en ce que le corps de valve (18) est sollicité en direction de sa position de base par la pression dans une (14) des chambres de travail (13, 14).

5. Dispositif de réglage à blocage continu selon l'une quelconque des revendications 1 à 4, caractérisé en ce que le corps de valve (18) est sollicité en direction de sa position de base par un ressort de valve (32).

6. Dispositif de réglage à blocage continu selon l'une quelconque des revendications 1 à 4, caractérisé en ce que l'ensemble de bague d'étanchéité (21) est sollicité en direction de sa position de base par la pression dans une (13) des chambres de travail (13, 14).

7. Dispositif de réglage à blocage continu selon l'une quelconque des revendications 1 à 6, caractérisé en ce que l'ensemble de bague d'étanchéité (21) est sollicité en direction de sa position de base par un ressort d'étanchéité (22).

8. Dispositif de réglage à blocage continu selon l'une quelconque des revendications 1 à 7, caractérisé en ce que le prolongement (26, 27) présente une partie de transition conique (26) et une tige de valve (27).

9. Dispositif de réglage à blocage continu selon l'une quelconque des revendications 1 à 8, caractérisé en ce que la chambre de valve (19) est reliée à une (13) des chambres de travail (13, 14), en ce que l'ensemble de bague d'étanchéité (21), sur un côté, est sollicité en direction de sa position de base par la pression régnant dans la chambre de valve (19), et, sur son autre côté, est exposé à la pression régnant dans l'autre (14) des deux chambres de travail (13, 14), et en ce que la tête de valve (25) est exposée, à l'extérieur de la chambre de valve (19), à la pression dans l'autre (14) des chambres de travail (13, 14), et est sollicitée par cette pression en direction de sa position de base.

10. Dispositif de réglage à blocage continu selon la revendication 9, caractérisé en ce qu'un ressort d'étanchéité (22), qui sollicite l'ensemble de bague d'étanchéité (21) en direction de sa position de base, est logé dans la chambre de valve (19).

11. Dispositif de réglage à blocage continu selon l'une quelconque des revendications 1 à 10, caractérisé en ce que le ressort de valve (32), qui sollicite le corps de valve (18) en direction de sa position de base, agit sur la tête de valve (25) à l'extérieur de la chambre de valve (19).

12. Dispositif de réglage à blocage continu selon la revendication 11, caractérisé en ce que le ressort de valve (32) est soutenu par une cage (33) par rapport à l'ensemble de piston (10) qui reçoit la chambre de valve (19).

13. Dispositif de réglage à blocage continu selon la revendication 12, caractérisé en ce que la cage (33) est conformée en pot, avec un fond (33a) et avec des languettes élastiques (34) orientées axialement, en ce que des épaulements radiaux (35) sont disposés sur les languettes élastiques (34), épaulements qui sont insérés élastiquement dans une rainure annulaire (40) de l'ensemble de piston (10), et en ce que le ressort de valve (32) s'appuie contre le fond (33a).

14. Dispositif de réglage à blocage continu selon la revendication 13, caractérisé en ce que la cage (33) bloque en position une bague de butée (29) par rapport à l'ensemble de piston (10), laquelle bague constitue tant la butée de corps de valve que la butée de bague d'étanchéité.

15. Dispositif de réglage à blocage continu selon l'une quelconque des revendications 1 à 14, caractérisé en ce que Le prolongement (26, 27) traverse hermétiquement un fond (19a) de la chambre de valve (19), et en ce qu'une extrémité du prolongement (26, 27) située à l'extérieur de la chambre de valve (19) est exposée à une pression indépendante de la pression régnant dans les chambres de travail (13, 14).

16. Dispositif de réglage à blocage continu selon la revendication 15, caractérisé en ce que l'extrémité du prolongement (26, 27) située à l'extérieur de la chambre de valve (19) est exposée à la pression atmosphérique.

17. Dispositif de réglage à blocage continu selon l'une quelconque des revendications 1 à 16, caractérisé en ce que la chambre de valve (19) est disposée coaxialement à l'intérieur du groupe constructif (9, 10) formé par la tige de piston (9) et l'ensemble de piston (10).

18. Dispositif de réglage à blocage continu selon l'une quelconque des revendications 1 à 17, caractérisé en ce que la tige de piston (9) présente un alésage (9a), et en ce qu'un poussoir de déclenchement (17), qui est en engagement avec le corps de valve (18), est logé dans cet alésage (9a).

19. Dispositif de réglage à blocage continu selon l'une quelconque des revendications 1 à 18, caractérisé en ce que la tige de piston (9) ne traverse qu'une seule paroi terminale (11, 12), et en ce que le fluide présent dans les chambres de travail (13, 14) est sous pression.

20. Dispositif de réglage à blocage continu selon la revendication 19, caractérisé en ce qu'un volume de liquide est disposé à l'intérieur des chambres de travail (13, 14), et en ce que le volume de liquide est séparé d'un volume de gaz comprimé par un piston séparateur (15).

EP 0 258 812 B1

# Fig.1

# Fig. 2

# Fig. 3

# Fig. 4